# EUROPÄISCHE PATENTANMELDUNG

(11) **EP 4 746 428 A1**
(43) Veröffentlichungstag der Anmeldung: **20.05.2026**
(21) Anmeldenummer: 25215437.2
(22) Anmeldetag: 13.11.2025
(51) Int. Cl.: H04N 23/50, G03B 17/02, G03B 17/55, G03B 30/00, H04M 1/02, H04N 23/51, H04N 23/55, H04N 23/57

(54) **KAMERA SOWIE MONTAGEVERFAHREN**

(30) Priorität: 15.11.2024 DE 102024133497
(71) Anmelder: MEKRA Lang GmbH & Co. KG, 91465 Ergersheim (DE)
(72) Erfinder: Lang, Susanne, 91465 Ergersheim (DE); Traub, Christian, 91522 Ansbach (DE)
(74) Vertreter: Winter, Brandl - Partnerschaft mbB

(57) **Zusammenfassung**

Die vorliegende Offenbarung betrifft eine Kamera (1) für ein Fahrzeug, mit einem Gehäuse (2), das einen Gehäusehohlraum ausbildet, einer in dem Gehäusehohlraum angeordneten Bildsensorplatine (3), die den Gehäusehohlraum in einen ersten Gehäusebereich und einen zweiten Gehäusebereich unterteilt, einem auf einer ersten Seite der Bildsensorplatine (3) angebrachten Bildsensor (4), und einem an dem Gehäuse (2) und/oder der Bildsensorplatine (3) fest angebrachten Baugruppe, die eine Optik (5), ein elektronisches Bauteil und eine mit dem elektronischen Bauteil (6) verbundene, elektrische Verbindungsleitung (7) aufweist, wobei die Verbindungsleitung (7) in dem Gehäusehohlraum durch die Bildsensorplatine (3) hindurchgeführt oder an der Bildsensorplatine (3) entlang vorbeigeführt ist und die Verbindungsleitung (7) auf einer zweiten Seite der Bildsensorplatine (3) oder von einer in dem zweiten Gehäusebereich angeordneten Gehäuseabdeckung oder Kontaktierungsplatine (9) kontaktiert wird.

## Beschreibung

### Technisches Gebiet

Die vorliegende Offenbarung betrifft eine Kamera für ein Fahrzeug, insbesondere Nutzfahrzeug, mit einem Gehäuse, das einen Gehäusehohlraum ausbildet, einer in dem Gehäusehohlraum angeordneten Bildsensorplatine, die den Gehäusehohlraum in einen ersten Gehäusebereich und einen zweiten Gehäusebereich unterteilt, einem auf einer ersten Seite der Bildsensorplatine angebrachten Bildsensor, und einem an dem Gehäuse und/oder der Bildsensorplatine fest angebrachten Baugruppe, die eine Optik, ein elektronisches Bauteil und eine mit dem elektronischen Bauteil verbundene, elektrische Verbindungsleitung aufweist.

### Hintergrund der Offenbarung

Eine solche Kamera ist bereits aus der EP 2 884 736 A1 bekannt. Insbesondere ist darin eine Kamera zur Verwendung an Fahrzeugen, insbesondere Nutzfahrzeugen, offenbart mit einem Gehäuse, zumindest einem im oder am Gehäuse angeordneten optischen Element, einer im Gehäuse angeordneten und zumindest eine Platine aufweisenden Platinengruppe mit jeweils zumindest einer aktiven Schaltung zum Ausführen einer direkten Kamerafunktion, zumindest einem Heizelement, das zum Erwärmen der Platinengruppe, des optischen Elements und/oder des Gehäuses angeordnet und angepasst ist, wobei das zumindest eine Heizelement unmittelbar an einer der Platinen der Platinengruppe angebracht ist, und zumindest einem Wärmeleitelement, das zum Übertragen der Wärme des Heizelements und/oder der Platinengruppe in das Gehäuse zwischen dem zumindest einen Heizelement und dem Gehäuse angeordnet und angepasst ist. Dabei ist das Heizelement direkt auf der Platine angeordnet, so dass das optische Element durch eine Wärmekontaktverbindung an der Platine erhitzt werden kann. Ein solcher Aufbau ist aber nur für kleinere optische Elemente geeignet, da bei größeren optischen Elementen ggf. die Heizleistung nicht ausreicht.

Weiter ist eine solche Kamera bereits aus der EP 3 035 665 A1 bekannt. Insbesondere ist darin ein Kamerasystem für ein Fahrzeug offenbart, mit einem Objektiv; einer ersten Leiterplatte, die mit einem Bildsensor versehen ist zum Erfassen einer über das Objektiv erhaltenen Bildinformation; und mindestens einer weiteren Leiterplatte, die für das Kamerasystem eine vorbestimmte Grundfunktion bereitstellt, wobei die erste Leiterplatte und jede der wenigstens einen weiteren Leiterplatte mindestens eine Verbindungseinheit aufweisen, über die die Leiterplatten jeweils elektrisch miteinander modular austauschbar verbindbar sind zur Anpassung des Funktionsumfangs des Kamerasystems gemäß der vorbestimmten Grundfunktion, wobei die wenigstens eine Verbindungseinheit eine Mehrzahl von Gruppen von elektrischen Anschlüssen aufweist, über die die erste Leiterplatte mit der mindestens einen weiteren Leiterplatte verbindbar ist zur Bereitstellung der vorbestimmten Grundfunktion für das Kamerasystem.

Auch ist aus der US 11 086 092 B2 eine Linsenanordnung für ein Kameramodul bekannt, welche eine Objektivlinse und eine auf der Objektivlinse angeordnete Heizanordnung aufweist, wobei die Heizanordnung so konfiguriert ist, dass sie Wärme erzeugt, wenn ein elektrischer Strom durch sie hindurchfließt. Dabei wird die Heizanordnung über eine Bildsensorplatine kontaktiert, indem ein Draht die Heizanordnung mit einer der Objektivlinse zugewandten Seite der Bildsensorplatine verbindet.

Bei solchen Kameras ist es entscheidend, dass die Optik präzise zu dem Bildsensor angeordnet bzw. ausgerichtet ist, um eine Fokussierung damit eine scharfe Bildaufnahme zu gewährleisten. Dabei wird die Optik über eine Klebeverbindung zum Bildsensor positioniert bzw. fixiert. Der Stand der Technik hat jedoch immer den Nachteil, dass während des Montageprozesses der Kamera aufgrund der konstruktiven Anordnung der einzelnen Kamerabestandteile Kräfte auf die Klebeverbindung wirken können, die sich vor allem dann, wenn die Klebeverbindung noch nicht ausreichend ausgehärtet ist, entscheidend auf die Positionierung der Optik zu dem Bildsensor auswirken. Insbesondere kann jegliche Spannung auf der Bildsensorplatine dazu führen, dass ein optimaler Fokuspunkt verloren wird.

Insbesondere wenn die mit dem elektronischen Bauteil verbundene Verbindungsleitung auf der Bildsensorplatine fixiert wird, kann es über Zug oder Druck der Verbindungsleitung zu einer leichten Bewegung der Optik zur Bildsensorplatine und damit zum Bildsensor führen, was wiederum zu einem Verlust des Fokuspunkt führen kann.

### Zusammenfassung der vorliegenden Offenbarung

Es ist also die Aufgabe der vorliegenden Offenbarung, die Nachteile aus dem Stand der Technik zu vermeiden oder wenigstens zu verringern. Insbesondere soll eine Kamera bereitgestellt werden, bei der eine präzise Ausrichtung der Optik zu dem Bildsensor sichergestellt werden kann, welche insbesondere nicht negativ durch die Kontaktierung der Verbindungsleitung beeinflusst wird.

Die Aufgabe der vorliegenden Offenbarung wird durch eine Kamera mit den Merkmalen des Patentanspruchs 1 bzw. durch ein Montageverfahren mit den Merkmalen des nebengeordneten Patentanspruchs gelöst.

Demnach wird die Aufgabe der vorliegenden Offenbarung durch eine Kamera gelöst. Die Kamera dient insbesondere zur Verwendung an einem Fahrzeug, insbesondere einem Nutzfahrzeug. Beispielsweise kann die Kamera ein Bestandteil eines Kamera-Monitor-Systems, wie eines Spiegelersatzsystems, sein.

Die Kamera hat ein Gehäuse, das einen Gehäusehohlraum ausbildet. Das heißt, dass Bestandteile der Kamera innerhalb des Gehäuses bzw. zumindest teilweise von dem Gehäuse umschlossen angeordnet werden können.

Die Kamera hat eine in dem Gehäusehohlraum angeordnete Bildsensorplatine. Die Bildsensorplatine kann auch als eine Sensorkopfplatine bezeichnet werden. Die Bildsensorplatine unterteilt das Gehäuse bzw. den Gehäusehohlraum in einen ersten Gehäusebereich und einen zweiten Gehäusebereich. Das heißt, dass die Bildsensorplatine bzw. eine Querschnittsebene der Bildsensorplatine den Gehäusehohlraum in zwei Gehäusebereiche trennt. Dabei wird unter unterteilen bzw. trennen keine abgedichtete bzw. abgeschlossene Abgrenzung verstanden, sondern, dass die Gehäusebereiche bspw. durch einen Freiraum miteinander in Verbindung stehen können. Der erste Gehäusebereich kann auch als ein vorderer Gehäusebereich bezeichnet werden, während der zweite Gehäusebereich als ein hinterer Gehäusebereich bezeichnet werden kann.

Die Kamera hat einen auf einer ersten Seite der Bildsensorplatine angebrachten Bildsensor. Die erste Seite der Bildsensorplatine kann auch als eine Vorderseite bezeichnet werden, während eine zweite Seite der Bildsensorplatine, die entgegengesetzt zu der ersten Seite ist, auch als eine Rückseite bezeichnet werden kann. Dabei ist die erste Seite der Bildsensorplatine in dem ersten Gehäusebereich angeordnet bzw. dem ersten Gehäusebereich zugewandt und die zweite Seite der Bildsensorplatine in dem zweiten Gehäusebereich angeordnet bzw. dem zweiten Gehäusebereich zugewandt. Das heißt, dass der Bildsensor in dem ersten Gehäusebereich angeordnet ist bzw. dem ersten Gehäusebereich zugewandt ist.

Die Kamera hat eine an dem Gehäuse und/oder der Bildsensorplatine fest angebrachte Baugruppe. Das heißt, dass die Baugruppe eine festgelegte bzw. definierte Position zu dem Gehäuse und/oder der Bildsensorplatine hat. Die Baugruppe weist eine Optik, ein elektronisches Bauteil und eine mit dem elektronischen Bauteil verbundene, elektrische Verbindungsleitung auf. Insbesondere können die Bestandteile der Baugruppe fest miteinander verbunden sein. Die Optik kann auch als ein Objektiv oder als eine Linsenanordnung bezeichnet werden. Die Verbindungsleitung dient insbesondere zur Versorgung des elektronischen Bauteils mit Strom/einer Spannung und/oder Daten. Dabei können Daten beispielsweise Daten/Signale zur Ansteuerung umfassen. Die Optik kann insbesondere an bzw. in dem ersten Gehäusebereich angeordnet sein. Das heißt, dass die erste Seite der Bildsensorplatine der Optik zugewandt sein kann. Entsprechend kann die erste Seite der Bildsensorplatine als eine Optikseite bezeichnet werden. Weiter entsprechend kann eine Anordnung in dem ersten Gehäusebereich bzw. in einem jenseits/auf der ersten Seite der Bildsensorplatine liegenden Bereich auch als auf der Optikseite (liegend) bezeichnet werden. Das elektronische Bauteil kann insbesondere im Bereich der Optik bzw. in dem ersten Gehäusebereich bzw. auf der Optikseite angeordnet sein. Das heißt, dass die erste Seite der Bildsensorplatine dem elektronischen Bauteil zugewandt sein kann.

Gemäß einem Aspekt der vorliegenden Offenbarung ist die Verbindungsleitung in dem Gehäusehohlraum durch die Bildsensorplatine hindurchgeführt oder an der Bildsensorplatine entlang vorbeigeführt. Mit anderen Worten erstreckt sich die Verbindungsleitung an der Bildsensorplatine entlang von dem ersten Gehäusebereich in den zweiten Gehäusebereich. Unter durch die Bildsensorplatine hindurch bzw. an der Bildsensorplatine entlang wird dabei insbesondere verstanden, dass die Verbindungsleitung nicht in die Bildsensorplatine integriert ist, sondern unabhängig von der Bildsensorplatine ist und kein Bestandteil der Bildsensorplatine ist. Insbesondere wird darunter also eine (möglichst) kraftfreie Hindurchführung und/oder Vorbeiführung der Verbindungsleitung bzw. eine Vorbeiführung ohne elektrische Kontaktierung der Bildsensorplatine verstanden. Das heißt, dass sich ein erstes Ende bzw. Kontaktierelement der Verbindungsleitung jenseits der ersten Seite der Bildsensorplatine (d.h. auf der Optikseite bzw. vor der Bildsensorplatine oder auf/an der Vorderseite der Bildsensorplatine) befindet und sich ein zweites Ende bzw. Kontaktierelement der Verbindungsleitung jenseits der zweite Seite der Bildsensorplatine (d.h. hinter der Bildsensorplatine oder auf/an der Rückseite der Bildsensorplatine) befindet. Das (erste bzw. zweite) Kontaktierelement kann insbesondere als ein Stecker und/oder eine Kontaktfeder und/oder ein Federkontakt ausgebildet sein. Dabei dient das erste Kontaktierelement zur (direkten) Kontaktierung des elektronischen Bauteils. Das erste Kontaktierelement kann auch integral in das elektronische Bauteil übergehen, beispielsweise als ein (ummantelter) Draht, der in eine Heizung, beispielsweise eine Heizfolie der Heizung, übergeht, ausgebildet sein. Das erste Kontaktierelement kann auch zur Kontaktierung mehrerer elektronischer Bauteile dienen oder mehrere Kontaktierungen über das (mehrteilig aufgebaute) elektronische Bauteil ausbilden. Insbesondere ist unter der hindurchgeführten Verbindungsleitung nicht zu verstehen, dass eine erste Leitung bspw. mit der Vorderseite der Bildsensorplatine verbunden ist, innerhalb der Bildsensorplatine Leitungen (zwischen einzelnen Lagen der Bildsensorplatine) ausgebildet sind und die Rückseite der Bildsensorplatine mit einer zweiten Leitung verbunden ist, welche wiederum zur Kontaktierung in dem zweiten Gehäusebereich dient. Das heißt aber auch, dass die Verbindungsleitung nicht darauf beschränkt ist, einteilig zwischen dem ersten Kontaktierelement und dem zweiten Kontaktierelement aufgebaut zu sein.

Gemäß dem Aspekt der vorliegenden Offenbarung wird die Verbindungsleitung auf einer zweiten Seite der Bildsensorplatine oder von einer in dem zweiten Gehäusebereich angeordneten Gehäuseabdeckung oder Kontaktierungsplatine kontaktiert. Das heißt, dass das zweite Kontaktierelement zur (direkten/unmittelbaren) Kontaktierung der zweiten Seite der Bildsensorplatine (d.h. an der Rückseite der Bildsensorplatine) oder der (der Rückseite der Bildsensorplatine zugewandte) Gehäuseabdeckung oder der (der Rückseite der Bildsensorplatine zugewandten) Kontaktierungsplatine dient. Mit anderen Worten ist eine Anschlussstelle für das zweite Kontaktierelement in dem zweiten Gehäusebereich angeordnet und wird beispielsweise durch die Rückseite der Bildsensorplatine selbst, einen Gehäusebestandteil, insbesondere die Gehäuseabdeckung, oder die Kontaktierungsplatine gebildet. Insbesondere dient das zweite Kontaktierelement als Spannungsanschluss und/oder als Datenanschluss für das elektronische Bauteil. Mit anderen Worten wird das elektronische Bauteil über die Bildsensorplatine, die Gehäuseabdeckung oder die Kontaktierungsplatine mit einer Spannung und/oder Daten versorgt.

Der Kern der Offenbarung besteht folglich darin, dass das elektronische Bauteil, das im Bereich der Optik und damit in einem vorderseitigen Bereich des Gehäuses bzw. der Kamera angeordnet ist, über die Verbindungsleitung in einem rückseitigen Bereich des Gehäuses bzw. der Kamera kontaktierbar ist, wobei die Verbindungsleitung durch die (den vorderseitigen Bereich von dem rückseitigen Bereich abgrenzende) Bildsensorplatine (physisch/bauraumtechnisch/mechanisch bzw. ohne elektrische Kontaktierung der Bildsensorplatine) hindurchgeführt bzw. an der Bildsensorplatine entlang vorbeigeführt ist. Mit anderen Worten liegt bei der Kamera eine Anschlussstelle zur Spannungsversorgung und/oder Datenversorgung des elektronischen Bauteils in einem anderen Gehäusebereich an das elektronische Bauteil, wobei die Verbindung zwischen dem elektronischen Bauteil und der Anschlussstelle über die durch die Bildsensorplatine oder zwischen der Bildsensorplatine und einer Gehäuseinnenwand hindurchgeführten Verbindungsleitung erfolgt.

Dies hat den Vorteil, dass die Kontaktierung der Verbindungsleitung insbesondere nicht mehr an der Vorderseite der Bildsensorplatine erfolgt. Eine Kontaktierung an der Vorderseite der Bildsensorplatine müsste während des Montageprozesses zur Ausrichtung der Optik zu dem Bildsensor durchgeführt werden, da die Vorderseite der Bildsensorplatine danach nicht mehr zugänglich ist. Jedoch würden wiederum bei der Kontaktierung oder bei Bewegung der Kamera (auch nach der Montage) Kräfte auf die Verbindungsleitung aufgebracht werden, die sich auf die Ausrichtung der Optik zu dem Bildsensor auswirken und zum Verlust des Fokuspunkt führen könnten. Durch die Hindurchführung der Verbindungsleitung durch die Bildsensorplatine bzw. der Vorbeiführung der Verbindungsleitung an der Bildsensorplatine entlang ist es möglich, die Kontaktierung der Verbindungsleitung von der Rückseite des Gehäuses her und erst nach dem Montageprozess zur Ausrichtung der Optik zu dem Bildsensor vorzunehmen. Somit könnte die Kontaktierung nach Aushärten der Klebeverbindung durch Verbinden der Verbindungsleitung mit der Rückseite der Bildsensorplatine, der Gehäuseabdeckung oder einer Kontaktierungsplatine hergestellt werden. Entsprechend kann die Ausrichtung der Optik zu dem Bildsensor verbessert bzw. sichergestellt werden.

Gemäß einer Ausführungsform kann die Verbindungsleitung flexibel ausgebildet sein, beispielsweise als ein Kabel oder ein Draht oder eine Flexprint-Verbindung, oder starr ausgebildet sein.

Gemäß einer Ausführungsform kann ein die Anschlussstelle ausbildendes Bauteil, d.h. die Bildsensorplatine, die Gehäuseabdeckung oder die Kontaktierungsplatine, einen Anschluss, insbesondere einen Steckanschluss aufweisen, der zur Verbindung, insbesondere Steckverbindung, mit einem anderen Bauteil dient. Das heißt, dass das die Anschlussstelle ausbildende Bauteil nicht selbst die Versorgung mit Spannung und/oder Daten sicherstellen muss, sondern die Versorgung nur über das die Anschlussstelle ausbildende Bauteil erfolgt, aber eine nachgeschaltete Kontaktierung erfolgen kann.

Gemäß einer bevorzugten Ausführungsform kann innerhalb der Bildsensorplatine oder zwischen einer Gehäuseinnenwand und der Bildsensorplatine eine Aussparung gebildet sein, durch welche sich die Verbindungsleitung hindurcherstreckt. Dabei können zwischen der Gehäuseinnenwand und der Bildsensorplatine bzw. in der dadurch gebildeten Aussparung auch weitere Bauteile, wie beispielsweise ein mit dem Gehäuse verbundene Kabelführung, angeordnet sein. Die Aussparung kann beispielsweise durch ein (Durchgangsloch-)Loch in Platinendickenrichtung gebildet sein. Alternativ kann die Aussparung dadurch ausgebildet sein, dass die Querschnitte der Bildsensorplatine und des Gehäuses im Bereich der Bildsensorplatine so aufeinander abgestimmt sind, insbesondere der Bildsensorplatinen-Querschnitt kleiner als der Gehäuse-Querschnitt bzw. weniger (aus)gefüllt gestaltet wird, dass sich die Aussparung zwischen der Gehäuseinnenwand und der Bildsensorplatine ergibt. Das heißt, dass die Aussparung innerhalb der Bildsensorplatine ausgebildet und umfangsseitig vollständig von Bildsensorplatinenmaterial umgeben/umschlossen sein kann. Das heißt auch, dass die Aussparung zwischen der Gehäuseinnenwand und der Bildsensorplatine ausgebildet und umfangsseitig teilweise durch die Gehäuseinnenwand und teilweise die Bildsensorplatine umgeben/umschlossen sein kann. Mit anderen Worten kann die Bildsensorplatine einen kleineren Querschnitt als das Gehäuse (im Bereich der Bildsensorplatine) haben. Das heißt, dass die Aussparung ein Längserstrecken/-hindurchführen (senkrecht zum Querschnitt der Bildsensorplatine) der Verbindungsleitung durch oder entlang der Bildsensorplatine ermöglicht.

Gemäß einer Weiterbildung der bevorzugten Ausführungsform kann die Aussparung einen größeren Querschnitt als die Verbindungsleitung haben. Insbesondere kann die Verbindungsleitung größtenteils oder vollständig umfangsseitig von dem Gehäuse und/oder der Bildsensorplatine beabstandet angeordnet oder anordnenbar sein. Dies hat den Vorteil, dass eine möglichst kraftfreie Führung der Verbindungsleitung ermöglicht wird.

Gemäß einer bevorzugten Ausführungsform kann die Optik mit dem Gehäuse und/oder der Bildsensorplatine, insbesondere im Bereich der ersten Seite der Bildsensorplatine, verklebt sein. Mit anderen Worten ist die Linsenanordnung über mindestens eine Klebestelle mit dem Gehäuse und/oder der Bildsensorplatine verbunden. So kann eine präzise Positionierung der Optik zu dem Bildsensor sichergestellt werden. Vorzugsweise kann die Klebestelle (bzw. eine erste Klebestelle) auf der ersten Seite der Bildsensorplatine angeordnet sein und den Bildsensor umfangsseitig umgeben. Beispielsweise kann die Klebestelle (geschlossen) kreisringförmig ausgebildet sein. So kann die Ausrichtung zuverlässig fixiert werden. Vorzugsweise kann die Klebestelle (bzw. eine zweite Klebestelle) auf einer Stirnseite des Gehäuses angeordnet sein. Beispielsweise kann die Klebestelle (geschlossen) kreisringförmig ausgebildet sein.

Insbesondere ist die Optik hinsichtlich eines Abstands und/oder einer Neigung zu dem Bildsensor positioniert bzw. ausgerichtet, um eine fokussierte Bildgebung sicherzustellen. Dabei kann die Optik zentriert oder mit einem Achsenoffset zu dem Bildsensor ausgerichtet sein.

Gemäß einer bevorzugten Ausführungsform kann die Bildsensorplatine fest mit dem Gehäuse verbunden sein, insbesondere verstemmt, beispielsweise über Stifte am Gehäuse und Löcher an der Bildsensorplatine, und/oder verschraubt und/oder verklebt sein. So wird eine festgelegte Positionierung zwischen der Bildsensorplatine und dem Gehäuse sichergestellt. Insbesondere wenn die Optik auch mit der Bildsensorplatine verklebt ist, ist eine solche exakte Positionierung von entscheidender Bedeutung. Alternativ kann die Bildsensorplatine auch nicht fest mit dem Gehäuse verbunden sein, sondern die Optik fest mit dem Gehäuse verbunden sein. In diesem Fall kann die Bildsensorplatine zur Optik ausgerichtet werden. Das heißt, dass die Bildsensorplatine nur indirekt über die Optik mit dem Gehäuse verbunden ist.

Gemäß einer bevorzugten Ausführungsform kann das Gehäuse eine (Kabel- )Führung für die Verbindungsleitung aufweisen. Die Führung kann beispielsweise in Form von Clips oder in Form eines Rahmens ausgebildet sein.

Gemäß einer bevorzugten Ausführungsform kann das elektronische Bauteil eine Heizung und/oder eine Fokuseinrichtung und/oder ein Reinigungselement und/oder ein Steuerelement zur Ansteuerung eines Elektromotors und/oder einer Lichtquelle sein. Die Heizung kann beispielsweise wie eine in der US 11 086 092 B2 beschriebene und mit der Bildsensorplatine verbundene Heizanordnung aufgebaut sein. Die Fokuseinrichtung kann zum Fokussieren und/oder zum Wechseln eines Filters oder einer Blende dienen. Die Lichtquelle kann insbesondere eine Infrarot-Lichtquelle sein. Das elektronische Bauteil kann insbesondere im Bereich der Optik angeordnet sein. Dabei ist das elektronische Bauteil vorzugsweise, aber nicht zwingend, mit der Optik verbunden. Insbesondere dient das elektronische Bauteil dazu, um zusätzliche Funktionen für die Optik bereitzustellen. Das heißt, dass das elektronische Bauteil funktionell mit der Optik assoziiert sein kann und/oder in räumlicher Nähe der Optik angeordnet sein kann bzw. nicht ein vollkommen beliebiges elektronisches Bauteil ist.

Gemäß einer bevorzugten Ausführungsform kann die Verbindungsleitung direkt mit einer bzw. der Anschlussstelle, die an einer zweiten Seite der Bildsensorplatine oder an der Gehäuseabdeckung oder an der Kontaktierungsplatine ausgebildet ist, verbunden sein, wobei die Verbindung zwischen der Verbindungsleitung und der Anschlussstelle als eine schwimmende Verbindung ausgebildet ist. Mit anderen Worten liegt bei Kontaktierung der Verbindungsleitung eine flexible Verbindung vor, durch beispielsweise Federn, so dass nur eine reduzierte Kraft auf das Gesamtsystem ausgeübt wird. Das heißt, dass etwas Spiel zwischen der Verbindungsleitung bzw. dem (zweiten) Kontaktierungselement und der Anschlussstelle vorhanden sein kann. Dies hat den Vorteil, dass eine durch die Verbindung zwischen dem (zweiten) Kontaktierungselement und der Anschlussstelle entstehende Kraft, die auf die Ausrichtung der Optik zu dem Bildsensor wirken könnte, reduziert wird.

Gemäß einer bevorzugten Ausführungsform kann die Kamera eine Spannungsquelle oder einen Spannungsanschluss zum Verbinden mit einer externen Spannungsquelle aufweisen. Gemäß der bevorzugten Ausführungsform kann die Spannungsquelle oder der Spannungsanschluss in dem Gehäusehohlraum angeordnet sein und über die Verbindungsleitung mit dem elektronischen Bauteil verbunden sein. Das heißt, dass das die Anschlussstelle ausbildende Bauteil die Spannungsquelle unmittelbar enthalten kann und zur unmittelbaren Spannungsversorgung des elektronischen Bauteils dienen kann, oder aber das die Anschlussstelle ausbildende Bauteil selbst als direkter Anschluss an eine Spannung und zur mittelbaren Spannungsversorgung des elektronischen Bauteils dienen kann. Mit anderen Worten kann die Spannungsquelle in der Kamera verbaut sein oder eine externe Spannungsquelle zur Spannungsversorgung dienen, wobei die externe Spannungsquelle beispielsweise über eine Power-over-Coax oder eine Power-overdataline oder eine separate Verbindungsleitung anschließbar oder angeschlossen sein kann.

Gemäß einer bevorzugten Ausführungsform kann die Verbindungsleitung, wenn sie zur Versorgung des elektronischen Bauteils mit Daten dient, an einen Mikrocontroller oder ein Steuerelement eines Fahrzeugkommunikationsnetzwerks, wie beispielweise CAN-Bus (Controller Area Network Bus), oder dergleichen anschließbar oder angeschlossen sein.

Gemäß einer bevorzugten Ausführungsform kann die Gehäuseabdeckung teilweise aus Kunststoff ausgebildet sein. Gemäß der bevorzugten Ausführungsform kann die Gehäuseabdeckung ein (metallisches) Kontaktierelement aufweisen. Das Kontaktierelement der Gehäuseabdeckung kann insbesondere als Anschlussstelle, d.h. zur Kontaktierung des zweiten Kontaktierelements der Verbindungsleitung dienen. Das Kontaktierelement kann vorzugsweise umspritzt sein, insbesondere als Einlegeteil ausgebildet sein. So kann eine freie Formgestaltung der Gehäuseabdeckung bei gleichzeitiger elektrischer Kontaktierbarkeit realisiert werden.

Demnach wird die Aufgabe der vorliegenden Offenbarung auch durch ein Montageverfahren für eine Kamera, insbesondere die beschriebene Kamera, gelöst. Das Montageverfahren weist die folgenden Schritte auf:
- Verbinden der Baugruppe mit dem Gehäuse und/oder der Bildsensorplatine über eine Klebeverbindung derart, dass Optik zu dem Bildsensor oder der Bildsensor zu der Optik ausgerichtet ist,
- Aushärten der Klebeverbindung,
- Kontaktieren der Verbindungsleitung, wobei das Verbinden nach dem Aushärten der Klebeverbindung erfolgt.

Mit anderen Worten wird die Optik über mindestens eine Klebestelle auf dem Gehäuse und/oder der Bildsensorplatine zum Bildsensor (oder der Bildsensor zu der Optik) ausgerichtet (um eine Fokussierung zu gewährleisten), wobei die Verbindungsleitung nach Aushärten des Klebstoffes der Klebestelle(n) mit der Anschlussstelle verbunden wird.

Gemäß einer bevorzugten Ausführungsform kann vor dem Aushärten des Klebstoffs keine äußere Kraft auf die Klebestelle wirken. Das heißt, dass nur das Eigengewicht und eine Einstellhilfe des Montageprozesses eine Kraft ausüben dürfen.

Gemäß einer bevorzugten Ausführungsform kann das Kontaktieren der Verbindungsleitung innerhalb des zweiten Gehäusebereichs erfolgen.

Gemäß einer bevorzugten Ausführungsform kann die Klebeverbindung vor dem Aushärten durch UV-Licht fixiert werden. So kann eine (leichte) Fixierung vor dem Aushärten erzeugt werden.

Gemäß einer bevorzugten Ausführungsform kann das vollständige Aushärten der Klebeverbindung in einem Temperaturbereich von 25 bis 200°C, insbesondere von 60 bis 100°C, vorzugsweise von 80 bis 90°C, weiter bevorzugt von 85°C, erfolgen. Das heißt, dass die Aushärtung bei erhöhten Temperaturen stattfindet. So kann die Festigkeit erhöht werden.

### Kurzbeschreibung der Figuren

Fign. 1 bis 5 zeigen unterschiedliche perspektivische Ansichten einer offenbarungsgemäßen Kamera bzw. deren Einzelteile,
Fign. 6 und 7 zeigen die Kamera zu unterschiedlichen Zeitpunkten bei der Montage der Kamera,
Fig. 8 zeigt eine Seitenansicht der Kamera, und
Fig. 9 zeigt eine Längsschnittdarstellung, geschnitten an der Linie IX aus Fig. 8, der offenbarungsgemäßen Kamera.

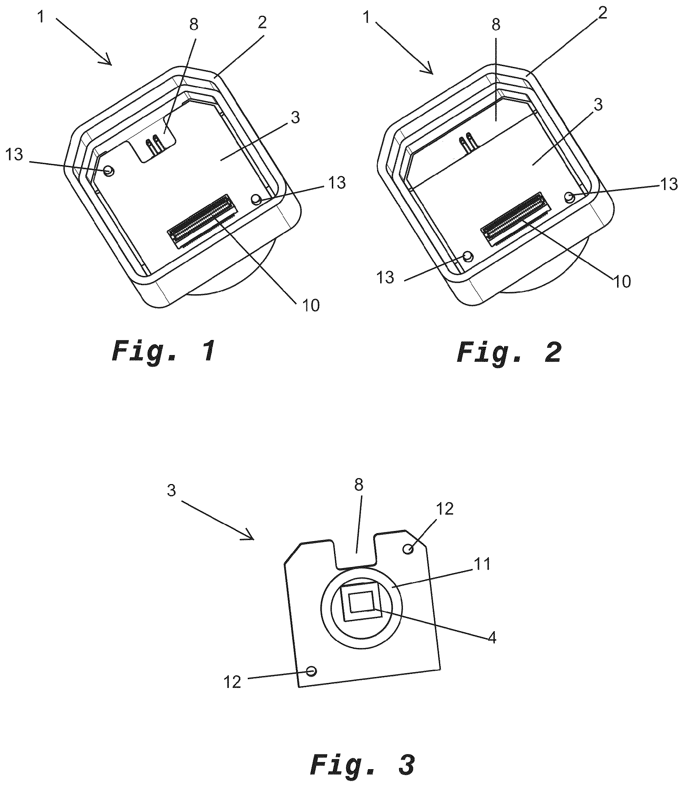

Fign. 1 bis 5 zeigen perspektivische Darstellungen einer Kamera 1 gemäß der vorliegenden Offenbarung und ihrer Bestandteile. Die Kamera 1 dient zur Verwendung mit einem Fahrzeug, insbesondere einem Nutzfahrzeug. Beispielsweise kann die Kamera 1 ein Bestandteil eines Kamera-Monitor-Systems, wie eines Spiegelersatzsystems, sein.

Die Kamera 1 weist ein Gehäuse 2 auf. Das Gehäuse 2 bildet bzw. definiert einen Gehäusehohlraum aus. Eine erste Seite des Gehäuses 2 kann als eine Gehäusevorderseite bezeichnet werden, während eine zweite Seite des Gehäuses 2, die der ersten Seiten gegenüberliegt, als eine Gehäuserückseite bezeichnet werden kann.

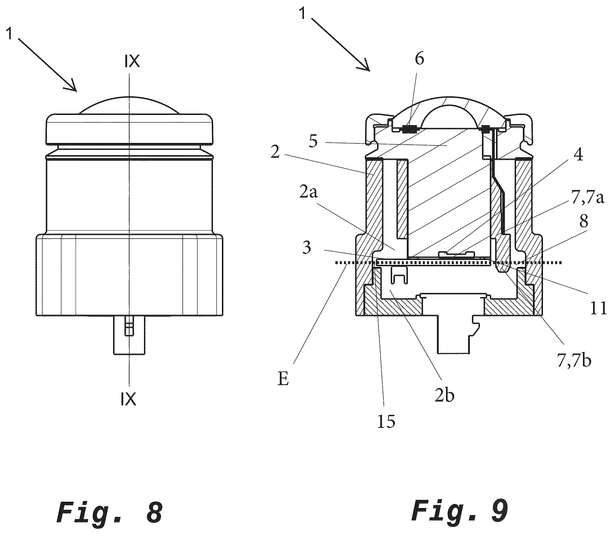

Die Kamera 1 weist eine in dem Gehäusehohlraum angeordnete Bildsensorplatine 3 auf. Die Bildsensorplatine 3 ist umfangsseitig durch das Gehäuse 2 umschlossen. Dabei kann die Bildsensorplatine 3 randseitig zumindest abschnittsweise direkt an dem Gehäuse 2 anliegen oder mit einem Umfangsspalt 15 (vgl. Fig. 9) von dem Gehäuse 2 beabstandet sein. Die Bildsensorplatine 3 kann insbesondere fest mit dem Gehäuse 2 verbunden sein, insbesondere mit dem Gehäuse 2 verstemmt sein.

Die Bildsensorplatine 3 unterteilt das Gehäuse 2 bzw. den Gehäusehohlraum in einen ersten Gehäusebereich 2a und einen zweiten Gehäusebereich 2b. Der erste Gehäusebereich 2a liegt auf einer ersten Seite der Bildsensorplatine 3. Der zweite Gehäusebereich 2b liegt auf einer (der ersten Seite gegenüberliegenden/entgegengesetzten) zweiten Seite der Bildsensorplatine 3. Der erste Gehäusebereich 2a kann auch als ein vorderer Gehäusebereich bezeichnet werden. Die erste Seite der Bildsensorplatine 3 kann auch als eine Vorderseite bezeichnet werden. Der zweite Gehäusebereich 2b kann auch als ein hinterer Gehäusebereich bezeichnet werden. Die zweite Seite der Bildsensorplatine 3 kann auch als eine Rückseite bezeichnet werden. Fign. 1 und 2 zeigen eine Ansicht auf die Gehäuserückseite und die Rückseite der Bildsensorplatine 3.

In der dargestellten Ausführungsform weist der vordere Gehäusebereich 2a eine vordere Öffnung auf. Das heißt, dass das Gehäuse 2 von der Gehäusevorderseite zugänglich ist, um Bauteile in das Gehäuse 2 einzusetzen. In der dargestellten Ausführungsform weist der hintere Gehäusebereich eine hintere Öffnung auf. Das heißt, dass das Gehäuse 2 von der Gehäuserückseite zugänglich ist, um Bauteile in das Gehäuse 2 einzusetzen. Zumindest eine der beiden Öffnungen, in der dargestellten Ausführungsform die hintere Öffnung, ist größer als die Bildsensorplatine 3, um die Bildsensorplatine 3 in das Gehäuse 2 einsetzen zu können.

Die Kamera 1 weist einen Bildsensor 4 auf. Der Bildsensor 4 ist auf der Vorderseite der Bildsensorplatine 3 fest angebracht. Fig. 3 zeigt eine Ansicht auf die Vorderseite der Bildsensorplatine 3.

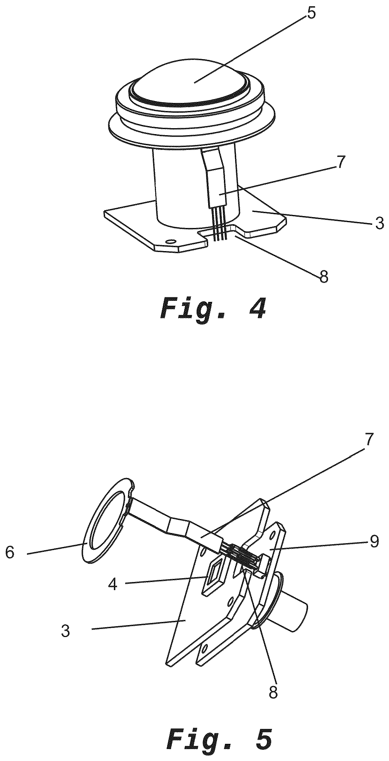

Die Kamera 1 weist eine Optik 5 auf. Die Optik 5 ist an dem Gehäuse 2 und/oder der Bildsensorplatine 3 fest angebracht. Insbesondere kann die Optik 5 mit dem Gehäuse 2 und/oder der Bildsensorplatine 3 verklebt sein. Die Optik 5 ist in bzw. an dem vorderen Gehäusebereich 2a angeordnet. Insbesondere kann die Optik 5 die vordere Öffnung des Gehäuses 2 bzw. den vorderen Gehäusebereich 2a verschließen. Die Optik 5 kann teilweise innerhalb und teilweise außerhalb des Gehäusehohlraums angeordnet sein. Insbesondere kann die Vorderseite der Bildsensorplatine 3 der Optik 5 zugewandt sein bzw. die Optik 5 an bzw. im Bereich der Gehäusevorderseite angeordnet sein. Fig. 4 zeigt eine Ansicht, bei der die Optik 5 bereits mit der Bildsensorplatine 3 verbunden ist.

Die Kamera 1 weist ein elektronisches Bauteil 6 auf. Das elektronische Bauteil 6 ist im Bereich der Optik 5 bzw. im Bereich der Gehäusevorderseite angeordnet. Dabei kann die Optik 5 beispielsweise einen Hohlraum ausbilden, innerhalb dessen das elektronische Bauteil 6 aufgenommen ist. Das elektronische Bauteil 6 ist in der dargestellten Ausführungsform als eine Heizung für die Optik 5 ausgebildet. Alternativ kann das elektronische Bauteil 6 als eine Fokuseinrichtung ausgebildet sein. Alternativ kann das elektronische Bauteil 6 als ein Reinigungselement ausgebildet sein. Alternativ kann das elektronische Bauteil 6 als ein Steuerelement zur Ansteuerung eines Elektromotors und/oder eine Lichtquelle ausgebildet. Die Kamera 1 kann auch mehrere elektronische Bauteile 6 aufweisen. Die mehreren elektronischen Bauteile 6 können unterschiedliche Funktionen, insbesondere die vorgenannten Funktionen, haben.

Die Kamera 1 weist eine elektrische Verbindungsleitung 7 auf. Die Verbindungsleitung 7 ist mit dem elektronischen Bauteil 6 verbunden. Insbesondere kann die Verbindungsleitung 7 (an einem ersten Ende) ein erstes Kontaktierungselement zur Kontaktierung des elektronischen Bauteils 6 aufweisen. Zudem kann die Verbindungsleitung 7 (an einem zweiten Ende) ein zweites Kontaktierungselement zur Kontaktierung einer Anschlussstelle der Kamera 1 zur Spannungsversorgung und/oder Datenversorgung aufweisen.

Gemäß der vorliegenden Offenbarung ist die Verbindungsleitung 7 in dem Gehäusehohlraum durch die Bildsensorplatine 3 hindurchgeführt oder an der Bildsensorplatine 3 entlang vorbeigeführt. Die Verbindungsleitung 7 (bzw. das zweite Kontaktierungselement) wird auf/von der Rückseite der Bildsensorplatine 3 (nicht dargestellt) oder von einer in dem zweiten Gehäusebereich 2b angeordneten Gehäuseabdeckung (nicht dargestellt) oder von einer in dem zweiten Gehäusebereich 2b angeordneten Kontaktierungsplatine 9 (vgl. Fig. 5) kontaktiert. Das heißt, dass das elektronische Bauteil 6 und die Anschlussstelle für die Verbindungsleitung 7 in unterschiedliche Gehäusebereichen, nämlich das elektronische Bauteil 6 in dem ersten Gehäusebereich 2a und die Anschlussstelle in dem zweiten Gehäusebereich 2b, angeordnet sind.

Dazu weist die Kamera 1 eine Aussparung 8 auf, die innerhalb der Bildsensorplatine 3 (nicht dargestellt) oder zwischen einer Gehäuseinnenwand und der Bildsensorplatine 3 (vgl. Fign. 1 und 2) gebildet ist. Die Verbindungsleitung 7 erstreckt sich durch die Aussparung 8 hindurch. Die Aussparung 8 kann beispielsweise durch eine Ausnehmung ausgebildet sein, die sich gegenüber einem Rand der Bildsensorplatine 3 nach innen erstreckt (vgl. Fig. 1). Die Aussparung 8 kann beispielsweise auch durch eine Anpassung bzw. Reduzierung eines Querschnitts der Bildsensorplatine 3 gebildet sein, so dass zwischen einem Rand der Bildsensorplatine 3 und der Gehäuseinnenwand ein Freiraum bzw. nicht gefüllter Querschnitt vorliegt.

Weiter ist in Fig. 2 zu erkennen, dass auf der Rückseite der Bildsensorplatine 3 ein Steckanschluss 10, insbesondere in Form eines Steckverbinders, wie beispielsweise eines Stapelsteckanschlusses, ausgebildet sein kann, um die Bildsensorplatine 3 mit einer weiteren Platine, beispielsweise der Kontaktierungsplatine 9, oder einem anderen Bauteil elektronisch zu verbinden.

Weiter ist in Fig. 3 zu erkennen, dass auf der Vorderseite der Bildsensorplatine 3 eine Klebestelle 11, insbesondere in Form einer (kreisförmigen) Kleberaupe, aufgebracht sein kann, um die Optik 5 daran zu befestigen. Die Klebestelle 11 ist um den Bildsensor 4 herum platziert.

Weiter ist in Fign. 1 bis 5 zu erkennen, dass die Bildsensorplatine 3 Löcher 12 aufweist und das Gehäuse 2 Stifte 13 aufweist, über die Bildsensorplatine 3 mit dem Gehäuse 2 verstemmt werden können.

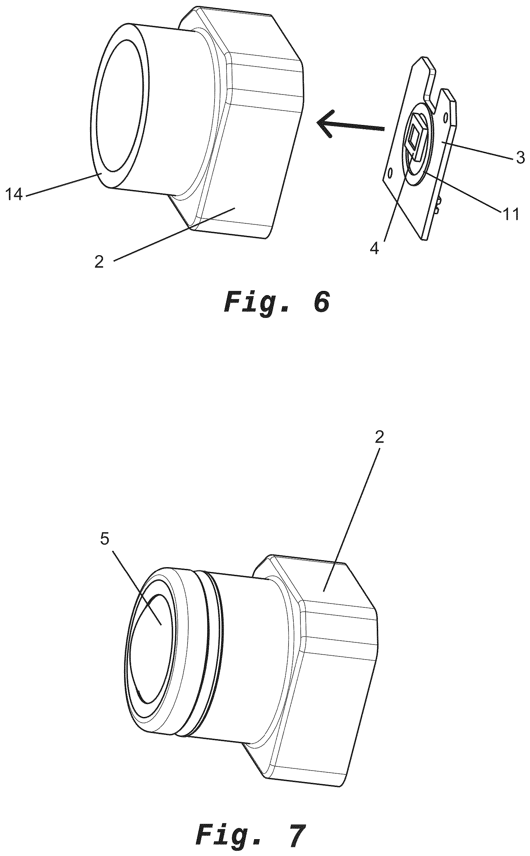

Fign. 6 und 7 zeigen die Kamera zu unterschiedlichen Montagezeitpunkten. In Fig. 6 ist gezeigt, dass die Bildsensorplatine 3 von der Gehäuserückseite her in das Gehäuse 2 eingesetzt wird. Auf der Vorderseite der Bildsensorplatine 3 ist die Klebestelle 11 ausgebildet. Auch an einer Stirnseite des Gehäuses 2 bzw. eines Gehäusebauteils ist eine Klebestelle 14, insbesondere in Form einer (kreisförmigen) Kleberaupe, ausgebildet, um die Optik 5 daran zu befestigen.

Fig. 8 zeigt eine Seitenansicht der Kamera. Fig. 9 zeigt eine Längsschnittdarstellung der Kamera 1 entlang der Linie IX in Fig. 8. In dieser Darstellung ist besonders gut, erkennbar, dass die Bildsensorplatine 3 eine Ebene E definiert, die das Gehäuse 2 bzw. den Gehäusehohlraum in die zwei Bereiche unterteilt, nämlich den ersten Gehäusebereich 2a und den zweiten Gehäusebereich 2b. Der Bildsensor 4, die Optik 5, das elektronische Bauteil 6 und ein vorderen Abschnitt 7a der Verbindungsleitung 7 sind in dem ersten Gehäusebereich 2a angeordnet, während ein hinterer Abschnitt 7b der Verbindungsleitung 7 in dem zweiten Gehäusebereich 2b angeordnet ist, wobei sich die Verbindungsleitung 7 durch die in der Ebene angeordnete Aussparung 8 hindurcherstreckt, nämlich durch die Bildsensorplatine 3 oder an der Bildsensorplatine 3 entlang.

Zudem ist in Fig. 9 zu erkennen, dass zwischen der Gehäuseinnenwand und der Bildsensorplatine der Umfangsspalt 15 ausgebildet sein kann, der jedoch kleiner als ein Querschnitt der Verbindungsleitung 7 ist.

Auch ist in Fig. 9 die Klebestelle 11, durch die die Bildsensorplatine 3 und die Optik 5 miteinander verbunden sind, zu erkennen.

### Bezugszeichenliste

- 1: Kamera
- 2: Gehäuse
- 2a: erster Gehäusebereich
- 2b: zweiter Gehäusebereich
- 3: Bildsensorplatine
- 4: Bildsensor
- 5: Optik
- 6: elektronisches Bauteil
- 7: Verbindungsleitung
- 7a: vorderer Abschnitt
- 7b: hinterer Abschnitt
- 8: Aussparung
- 9: Kontaktierungsplatine
- 10: Steckanschluss
- 11: Klebestelle
- 12: Loch
- 13: Stift
- 14: Klebestelle
- 15: Umfangsspalt

- E: Ebene

## Patentansprüche

1. Kamera (1) für ein Fahrzeug, mit
einem Gehäuse (2), das einen Gehäusehohlraum ausbildet,
einer in dem Gehäusehohlraum angeordneten Bildsensorplatine (3), die den Gehäusehohlraum in einen ersten Gehäusebereich (2a) und einen zweiten Gehäusebereich (2b) unterteilt,
einem auf einer ersten Seite der Bildsensorplatine (3) angebrachten Bildsensor (4), und
einem an dem Gehäuse (2) und/oder der Bildsensorplatine (3) fest angebrachten Baugruppe, die eine Optik (5), ein elektronisches Bauteil und eine mit dem elektronischen Bauteil (6) verbundene, elektrische Verbindungsleitung (7) aufweist,
**dadurch gekennzeichnet, dass**
die Verbindungsleitung (7) in dem Gehäusehohlraum durch die Bildsensorplatine (3) hindurchgeführt oder an der Bildsensorplatine (3) entlang vorbeigeführt ist und die Verbindungsleitung (7) auf einer zweiten Seite der Bildsensorplatine (3) oder von einer in dem zweiten Gehäusebereich (2b) angeordneten Gehäuseabdeckung oder Kontaktierungsplatine (9) kontaktiert wird.

2. Kamera (1) nach Anspruch 1, **dadurch gekennzeichnet, dass** eine Aussparung (8) innerhalb der Bildsensorplatine (3) oder zwischen einer Gehäuseinnenwand und der Bildsensorplatine (3) gebildet ist, durch welche sich die Verbindungsleitung (7) hindurcherstreckt.

3. Kamera (1) nach Anspruch 1 oder 2, **dadurch gekennzeichnet, dass** die Optik mit dem Gehäuse (2) und/oder der Bildsensorplatine (3), insbesondere im Bereich der ersten Seite der Bildsensorplatine (3), verklebt ist.

4. Kamera (1) nach einem der Ansprüche 1 bis 3, **dadurch gekennzeichnet, dass** die Bildsensorplatine (3) fest mit dem Gehäuse (2) verbunden ist, insbesondere mit dem Gehäuse (2) verstemmt und/oder verschraubt und/oder verklebt ist oder über die Optik (5) mit dem Gehäuse (2) verbunden ist.

5. Kamera (1) nach einem der Ansprüche 1 bis 4, **dadurch gekennzeichnet, dass** das elektronische Bauteil (6) eine Heizung und/oder eine Fokuseinrichtung und/oder ein Reinigungselement und/oder ein Steuerelement zur Ansteuerung eines Elektromotors und/oder eine Lichtquelle ist.

6. Kamera (1) nach einem der Ansprüche 1 bis 5, **dadurch gekennzeichnet, dass** die Verbindungsleitung (7) direkt mit einer Anschlussstelle, die an einer zweiten Seite der Bildsensorplatine (3) oder an der Gehäuseabdeckung oder an der Kontaktierungsplatine ausgebildet ist, verbunden ist, wobei die Verbindung zwischen der Verbindungsleitung (7) und der Anschlussstelle als eine schwimmende Verbindung ausgebildet ist.

7. Kamera (1) nach einem der Ansprüche 1 bis 6, **dadurch gekennzeichnet, dass** die Kamera (1) eine Spannungsquelle oder einen Spannungsanschluss zum Verbinden mit einer externen Spannungsquelle aufweist, wobei die Spannungsquelle oder der Spannungsanschluss in dem Gehäusehohlraum angeordnet ist und über die Verbindungsleitung (7) mit dem elektronischen Bauteil verbunden ist.

8. Montageverfahren für eine Kamera (1) nach einem der Ansprüche 1 bis 7, mit den folgenden Schritten:
- Verbinden der Baugruppe mit dem Gehäuse (2) und/oder der Bildsensorplatine (3) über eine Klebeverbindung (11, 14) derart, dass die Optik (5) zu dem Bildsensor (4) oder der Bildsensor (4) zu der Optik (5) ausgerichtet ist,
- Aushärten der Klebeverbindung (11, 14),
- Kontaktieren der Verbindungsleitung (7), wobei das Kontaktieren nach dem Aushärten der Klebeverbindung (11, 14) erfolgt.

9. Montageverfahren nach Anspruch 8, wobei das Kontaktieren der Verbindungsleitung (7) innerhalb des zweiten Gehäusebereichs (2b) erfolgt.

10. Montageverfahren nach Anspruch 8 oder 9, wobei die Klebeverbindung (11, 14) vor dem Aushärten durch UV-Licht fixiert wird.
